# EUROPEAN PATENT APPLICATION

(11) **EP 1 234 895 A2**
(43) Date of publication of application: **28.08.2002**
(21) Application number: 02251215.6
(22) Date of filing: 22.02.2002
(51) Int. Cl.: C23C 16/44, C23C 8/10, G02B 6/132, G02B 6/122, H01L 21/316

(54) **A method for producing an optical waveguide substrate and an optical waveguide substrate**

(30) Priority: 26.02.2001 JP 2001050996
(71) Applicant: SHIN-ETSU CHEMICAL CO., LTD., Chiyoda-ku Tokyo (JP)
(72) Inventor: Makikawa, Shinji, c/o Adv.Funct.Mat.Res.Ctr., Annaka-shi, Gunma-ken (JP)
(74) Representative: Cooper, John

(57) **Abstract**

There is disclosed a method for producing an optical waveguide substrate at least comprising a step of forming a silica film to be an optical waveguide having a thickness of 5µm or more on a surface of a substrate (4) by oxidizing a silicon substrate characterized in that the oxide film (5) is formed by forming an oxide film having a thickness of 0.3µm or more on the silicon substrate first, and then oxidizing the silicon substrate in an oxidizing atmosphere heated at 1000°C or higher to form a remaining oxide film, and also disclosed an optical waveguide substrate produced by the method. There can be provided a method for producing an optical waveguide substrate comprising oxidizing a silicon substrate to a relatively deep part characterized in that particles generated due to exfoliation and oxidation of silicon atoms are quite few on the silica film, and thus a high quality optical waveguide substrate is produced, and also provided an optical waveguide substrate produced by the method.

## Description

### BACKGROUND OF INVENTION

### Field of the Invention

The present invention relates to a method for producing an optical waveguide substrate comprising oxidizing a silicon substrate to a relatively deep part, to form a silica film to be an optical waveguide on the surface, so that an optical waveguide substrate of high quality with few defects and particles is produced, and relates to an optical waveguide substrate produced by the method.

### Description of the Related Art

There are a silica substrate and a silicon substrate as a substrate used for an optical waveguide type device for optical communication. Among them, the silicon substrate is used for semiconductor integrated circuits, and is characterized in good heat conductivity and surface workability suitable for various working methods, such as etching, oxidization, deposition and the like. Furthermore, there are advantages that a diameter has been larger, and the substrate is available comparatively cheaply. Accordingly, taking of such advantages, a silicon substrate has been used as an optical waveguide substrate in recent years.

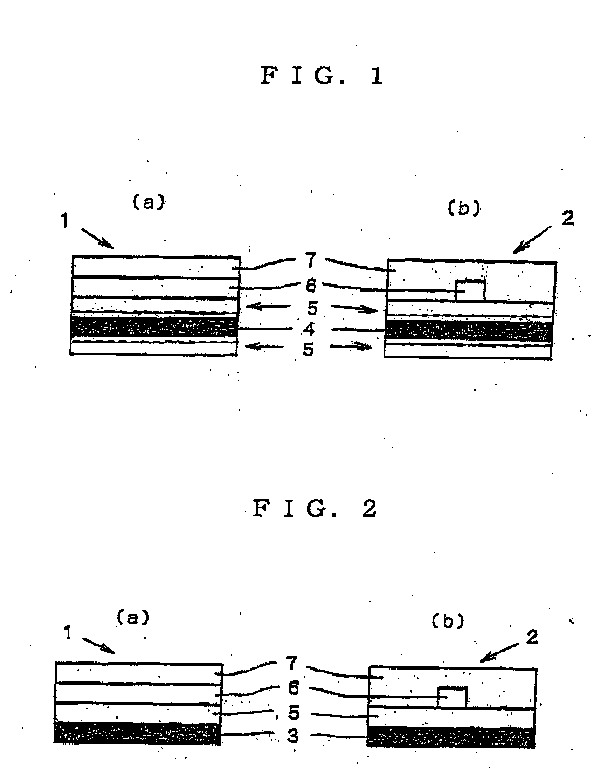

According to a conventional method for producing a waveguide device, as shown in Fig. 2, the optical waveguide is formed, both in the case of (a) slab type waveguide 1 and (b) channel type waveguide 2, by forming a silica glass film called an under clad film 5 on the surface of a substrate 3 so as to have a thickness of about 5-30 µm, followed by laminating a core layer (silica glass) 6 and an upper clad film (silica glass) 7 thereon.

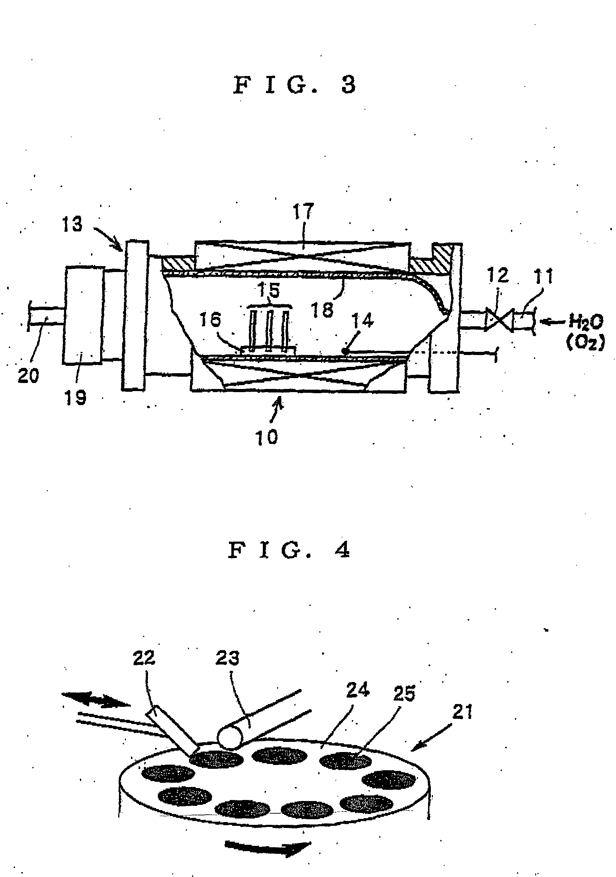

As these methods for forming an oxide film consists of silica glass, there is a flame hydrolysis deposition method (FHD method) using a flame deposition equipment 21 as shown in Fig. 4, wherein silicon compounds, such as a silicon tetrachloride is introduced into oxyhydrogen flame which comes out of an oxyhydrogen burner 22, and burned, so that a silicon oxide (SiO₂) is deposited on the surface of a substrate 25. In this case, there has been used a tact system wherein every time a predetermined amount of the oxide is deposited on the surface of the substrate 25 which is set on a turntable 24, the substrate 25 is rotated and transferred. An exhaust combustion gas and glass flour which was not deposited are discharged out of the system through an exhaust pipe 23.

Other than the flame depositing method, there is a thermal oxidation method using a thermal oxidation furnace 10 as shown in Fig. 3, wherein a silicon-substrate 15 itself is oxidized and a silica glass film is formed on a surface of the substrate.

According to the thermal oxidation method, since an oxide film can be formed on both of the front surface and the back surface of the silicon substrate, it has an advantage that the substrate is not warped after film formation, unlike a depositing method such as a flame hydrolysis depositing method or the like, and is characterized in that a location gap of a pattern does not arise at an exposure process performed as a later process.

According to the thermal oxidation method, the substrate is oxidized by exposure to an oxidizing atmosphere, as in a steam oxidation method, and it takes 5000 minutes or more to form an oxide film 5 µm or more, even by a steam oxidation method wherein an oxidation rate is relatively high, and even at a high temperature of 1100°C. Therefore, in order to form an under clad silica film with a thickness of 5-30 µm used for an optical waveguide, it is necessary to expose the substrate to a steam atmosphere at 1100°C or higher for a long time as 2000-125000 minutes, which may lead to a disadvantage that productivity is quite low.

Furthermore, when the surface of the silica film oxidized over long time for an optical waveguides is irradiated with a light of 100,000 Luxes using a high luminance halogen lamp, and the surface is observed, particles with a size of 0.3 µm or more are often observed all over the wafer. When the cause thereof has been studied further, it turns out that they are caused as follows. Silicon atoms on the surface of a silicon substrate exfoliate from the surface by heating at high temperature, and then are oxidized in a gas of a steam atmosphere. Thereafter, floats as a silicon oxide in the atmosphere are adhered again on the silicon substrate. If there are such defects, they become light-scattering points and induce optical loss. As a result, performance of an optical waveguide substrate will be lowered.

On the other hand, an oxide film needed for a semiconductor integrated circuit is characterized in being very thinner as 0.2-3 µm, compared with a glass film for an optical waveguide, and it is formed, for example, by being exposed to steam atmosphere or the like for a relatively short time, for example, for 10-1000 minutes at 1000°C. Accordingly, there are almost no defects such as particles on the finished surface.

### SUMMARY OF THE INVENTION

The present invention has been accomplished to solve the above-mentioned problems. An object of the present invention is to provide a method which can provide an optical waveguide substrate of high quality with quite few particles formed as a result that silicon atoms exfoliate and are oxidized, when a silicon substrate is oxidized to a relatively deep part to form a silica film to be an optical waveguide on the surface, and also provide an optical waveguide substrate produced by the method.

To achieve the above mentioned object, the present invention provides a method for producing an optical waveguide substrate at least comprising a step of forming a silica film to be an optical waveguide having a thickness of 5 µm or more on a surface of a substrate by oxidizing a silicon substrate wherein the oxide film is formed by forming an oxide film having a film thickness of 0.3 µm or more on the silicon substrate first, and then oxidizing the silicon substrate in an oxidizing atmosphere heated at 1000°C or higher to form a remaining oxide film.

As described above, if the optical waveguide substrate is produced by forming an oxide film to be an under clad film in two steps, generation of particles can be suppressed, and the particles can be prevented from readhering to the substrate, and therefore an optical waveguide having a quite high quality can be manufactured.

In that case, it is preferable to form the oxide film having a film thickness of 0.3 µm or more first on the silicon substrate by thermal oxidization in an oxidizing atmosphere heated at 1000°C or higher.

If it is formed in this way, a dense oxide film with a high density can be formed. Accordingly, in an oxidization process conducted later, particles are not generated and an optical waveguide substrate with few particles can be surely produced.

The oxidizing atmosphere is preferably an atmosphere containing steam.

As described above, if a silicon substrate is oxidized in an oxidizing atmosphere containing a steam, the oxidizing rate is comparatively high, and thus time shortening of the oxidizing process can be achieved.

In this case, it is preferable to wash a substrate between the step of forming an oxide film having a film thickness of 0.3 µm or more first on a silicon substrate and the next step of forming the remaining oxide film.

If it is conducted in this way, the substrate on which few particles are adhered can be more surely produced.

The present invention also provides an optical waveguide substrate that a silica film to be an optical waveguide having a film thickness of 5 µm or more is formed by oxidizing a silicon substrate on a surface of the silicon substrate characterized in that particles having a size of 0.3 µm or more adhered on the surface of the optical waveguide substrate are 500 numbers/cm² or less.

As described above, according to the present invention, an optical waveguide substrate that has few particles, i.e., that particles having a size of 0.3 µm or more adhered on the surface of the optical waveguide substrate are 500 numbers/cm² or less, further 100 numbers/cm² or less can be obtained.

Hereafter, the present invention will be explained in detail.

The inventors of the present invention have studied the cause of generation of the particles in the process for producing an optical waveguide substrate, especially in the step of forming an silica film which is relatively thick as 5-to 10 µm on both surfaces of the silicon substrate by thermally oxidizing the surface of the silicon substrate, and investigated thoroughly as for a method for preventing them. As a result, they have found that it can be prevented by forming a thin oxide film first on the silicon substrate and then forming the remaining oxide film, further studied conditions therefor, and thereby completed the present invention.

The cause of generation of particles is as follows. Silicon atoms on the surface of a silicon substrate and exfoliate from the surface by heating at high temperature, for example at 1100°C or more, and then are oxidized in a steam atmosphere. Thereafter, floats as silicon oxide in the atmosphere adhere again on the silicon substrate. If there are such defects, they become light-scattering points and induce optical loss. As a result, performance of the optical waveguide substrate will be lowered.

Although a melting point of a silicon substrate is 1420°C, if the surface a silicon is exposed to an atmosphere of an elevated-temperature as 1000°C or higher for forming an oxide film with 5 µm or more, silicon atoms will exfoliate from the surface of the substrate due to a vapor pressure of silicon, and will float. The floating silicon atoms are reacted with oxygen gas contained in an oxidizing atmosphere, and adhered again on the surface of the silicon substrate as silicon oxide with a size of 0.3 µm or more, and thereby particles are generated.

The method for preventing the particles from generating is as follows. If the silica film having higher heat-resistance is formed in advance on the silicon substrate so as to have a thickness of 0.3 µm, silicon atoms will hardly come off the surface at 1000°C or higher. Accordingly, almost no particles are generated in the later oxidizing step. Moreover, since the silica film is glass, it is never oxidized more even when it is exposed to an oxidizing atmosphere. Then, if the remaining thick oxide film is formed in an oxidizing atmosphere heated at 1000°C or higher, the oxide film having a predetermined thickness can be obtained. Since particles are never generated at the latter oxidizing step, the substrate with adhesion of few particles can be obtained.

If the thickness of the thin silica film formed in the first step is thinner than 0.3 µm, silicon atoms diffuse through the thin silica film, and the silicon atoms will react with the oxidizing gas on the surface of the silica film, exfoliate and float. Therefore, a thickness of the silica film is preferably 0.3 µm or more.

Moreover, the temperature at which the silica film with 0.3 µm or more is formed in the first step is preferably 1000°C or higher. Because, the denseness of the glass film formed by oxidizing a silicon substrate generally increases with a rise of an oxidizing temperature. If the temperature is lower than 1000°C, denseness of the glass film is low, and therefore silicon atoms may be spread on the surface of the substrate through the glass film.

A method of thermally oxidizing a silicon substrate can be a dry oxygen oxidation, wet oxygen (containing steam) oxidation, steam (100%) oxidation, steam (diluted with nitrogen) oxidation, hydrogen combustion oxidation (pyrogenic oxidation), oxygen partial pressure oxidation, hydrochloric acid oxidation, or the like. Among of them, the method using an atmosphere which contains a steam as oxidizing atmospheres, such as wet oxygen (water steam) oxidation or steam (100%) oxidation is especially suitable as an oxidizing method for the present invention, since an oxidizing rate is comparatively high.

After forming the oxide film with 0.3 µm or more, in order to improve cleanliness of the surface of the oxidized silicon substrate after lowering the temperature once, pure water or SC-1 (hydrogen peroxide-ammonia-water) washing, or HF washing can be conducted. If the oxide film with 5 µm or more is formed in the later step after washing the substrate, the substrate wherein few particles are adhered can be surely obtained.

In the method for producing an optical waveguide substrate at least comprising a step of forming a silica film to be an optical waveguide having a thickness of 5 µm or more on a surface of a substrate by oxidizing a silicon substrate, the oxide film is formed by forming an oxide film having a film thickness of 0.3 µm or more on the silicon substrate first, and then oxidizing the silicon substrate in an oxidizing atmosphere heated at 1000°C or higher to form a remaining oxide film. Thereby, there can be produced an optical waveguide substrate having high quality wherein defects such as a crack, deformation and warp are not caused, and quite few particles, for example, particles of 500 numbers/cm² or less having a size of 0.3 µm or more are generated.

### BRIEF DESCRIPTION OF THE DRAWINGS

Fig. 1 is a sectional view showing one example of the optical waveguide formed by a method for producing the optical waveguide substrate of the present invention.
(a) A slab type, (b) a channel type.

Fig. 2 is a sectional view showing one example of the optical waveguide formed by the conventional method for producing the optical waveguide.
(a) A slab type, (b) channel type.

Fig. 3 is an explanatory view showing one example of a thermal oxidation furnace used in the method for producing an optical waveguide substrate.

Fig. 4 is an explanatory view showing one example of the flame hydrolysis deposition equipment used in the method for producing an optical waveguide substrate.

### DESCRIPTION OF THE INVENTION AND A PREFERRED EMBODIMENT

The present invention will be further described below in detail based on drawings, but the present invention is not limited thereto.

An example of a silicon optical waveguide type device produced by the method for producing an optical waveguide substrate of the present invention is shown in (a) and (b) of Fig. 1.

In each case of the slab type 1 or the channel type 2, under clad films (thermal oxidation film) 5, 5 are formed on both of the front and back surface of a silicon substrate 4. The thermal oxidation film 5 consists of a thin oxide film formed by thermal oxidation of the first step and a thick oxide film formed by oxidation of the later step. On the under clad film 5, a core layer 6 is formed, and an upper clad film 7 is formed thereon. Thereby, the optical waveguide type device is formed. The core layer 6 has a light propagation activity, and it is in the shape of a film in slabs type 1 and is formed in the shape of a square bar by removing unnecessary parts of the core film in channel type 2.

In the silica oxide film constituting of such optical waveguide type device, the method for producing of the present invention can be applied to the under clad film. For example, the under clad film can be formed by oxidizing both of the front surface and the back surface of the silicon substrate 15 according to a thermal oxidizing method, using a thermal oxidation furnace 10 shown in Fig. 3, so that silica glass is formed.

The thermal oxidation furnace 10 is a kanthal heater tubular furnace 13 which heat at 1000°C or higher, in which a work tube 18 consisting of silica or silicon carbide is arranged. A sample base 16 made of silica or silicon carbide is placed therein, and a silicon substrate 15 is set thereon. An oxidizing gas such as a steam with high purity is introduced through the opening-and-closing valve 12 from a gas introducing tube 11 provided at the end of the work tube 18, and a temperature is raised by a heater 17 so that a temperature in the work tube 18 may become 1100-1250°C as measured by a thermosensor 14 consists of a thermocouple. When introducing an oxidizing gas with maintaining the temperature, the surface of the silicon substrate 15 is oxidized by active oxygen formed by decomposition of steam or the like as shown in following chemical formula: Si + O₂ → SiO₂, and a pure silica glass film with a high density (an under clad film) is formed on the whole surfaces of the silicon substrate 15.

The method of the present invention is characterized in dividing the thermal oxidation to form this under clad film into two steps. In the fist step, the oxide film having a film thickness of 0.3 µm or more is formed on the silicon substrate once. In the next step, the silicon substrate is oxidized in an oxidizing atmosphere heated at 1000°C or higher, so that the remaining oxide film is formed and thus the under clad film of predetermined thickness can be obtained.

Next, as a core layer, the silica glass having a composition of, for example, SiO₂-P₂O₅-B₂O₃-GeO₂ is deposited by a FHD method, and then subjected to high temperature treatment for transparent vitrification. CVD, sputtering or the like can also be used as a method for depositing the core layer.

In the case of a channel type, an unnecessary portion is subsequently removed from the core layers by a reactive ion etching method or the like, and a core in the shape of a square bar is formed. Then, a silica glass film having a composition of, for example, SiO₂-P₂O₅-B₂O₃ is deposited on the core as an upper clad film by the FHD method, and subjected to high temperature treatment for transparent vitrification, and thereby an optical waveguide type device can be obtained.

In the silicon optical waveguide type device produced by the method described above, almost no particles exist on the surface of the under clad film, and no defects such as a crack, deformation and warp are caused thereon. Accordingly, there are no defects such as particles, crack, deformation and warp in the device obtained by forming a core layer and an upper clad film on it. Therefore, high quality devices can be obtained.

The present invention will be specifically explained with examples and comparative examples, but the present invention is not limited thereto.

### (Example 1)

For thermal oxidation of a first stage, silicon substrates 15 with a diameter of 4 inches and a thickness of 1 mm were set at equal intervals on a sample base 16 made of silicon carbide in a kanthal heater tubular furnace 13 which can heat at 1200°C or higher as shown in Fig. 3. The sample base 16 was introduced in a work tube 18 made of silicon carbide around which the kanthal heater (kanthal APM240φ) which was a tubular furnace 13 was arranged, and covered with a lid 19 made of silicon carbide which has an exhaust pipe 20. Silica glass may be used for as a material of the work tube 18. Moreover, either silica glass or silicon may also be used as a material of the sample base 16.

The opening-and-closing valve 12 of the gas introducing pipe 11 connected to the silica container (unillustrated) in which steam was generated by boiling pure water was opened, and steam was introduced to the work tube 18 at a flow rate of 1 L/min. In order to prevent the work tube 18 from being damaged due to a rapid temperature change, temperature was raised at a slow rate of 3 °C/min until the inside temperature of the work tube 18 get 1000°C. After maintaining the temperature for 100 minutes with continuing introduction of steam, introduction of steam was stopped and temperature of the work tube 18 was lowered at a rate of 3 °C/min. When it was cooled enough, the sample base 16 was pulled out, and thereby the silica film with the intended thickness of 0.32 µm was formed on the surface of the silicon substrate 15. Subsequently, the surface of the silica film was washed with pure water in order to maintain the cleanliness thereof.

Next, in a similar method to the above as thermal oxidation of the latter stage, the washed silicon substrate 15 was set at equal intervals on the sample base 16 in the tubular furnace 13 which can heat at 1200°C or higher, introduced in the work tube 18, and covered with a lid 19 which has an exhaust pipe 20.

Subsequently, as described above, the opening-and-closing valve 12 of the gas introducing pipe 11 connected to the silica container (unillustrated) in which steam was generated by boiling pure water was opened, and the steam was introduced to the work tube 18 at a flow rate of 1 L/min. In order to prevent the work tube 18 from being damaged due to the rapid temperature change, temperature was raised at a slow rate of 3 °C/min until the inside temperature of the work tube 18 get 1200°C. After maintaining the temperature for 5000 minutes with continuing introduction of steam, introduction of steam was stopped and the work tube 18 was cooled at a rate of lowering temperature of 3 °C/min. When it was cooled enough, the sample base 16 was pulled out, and thereby there can be obtained the optical waveguide wherein the silica film with the intended thickness of 5.1 µm was formed on the surface of the silicon substrate 15. The surface was measured with a dust-particle-inspection equipment (Hitachi Electronics Engineering). The particles with a size of 0.3 µm or more were few as 10 number/cm² on average.

### (Example 2)

Using the same apparatus as Example 1, a silica film with a thickness of 0.32 µm was formed on the surface of a silicon substrate 15 by the same method as Example 1 except that the heat treatment of the first step was conducted by oxidizing thermally for 150 minutes at a temperature of 900°C. Then, after washing the substrate, the substrate was maintained for 2000 minutes at a temperature of 1200°C by the same apparatus and method as Example 1, and the optical waveguide substrate in which the silica film with the intended thickness of 5.1 µm was formed on the surface of the silicon substrate 15 was obtained.

The surface was measured with a dust-particle-inspection equipment. The number of the particles were 350 number/cm².

### (Comparative Example 1)

Using the same apparatus as Example 1, the silica film with a thickness of 5 µm was formed on the surface of a silicon substrate 15 by the same method as Example 1 except that heat treatment was conducted at a time at 1100°C for 2500 minutes.

The surface was measured with a dust-particle-inspection equipment. A quite large number of particles as 1000 number/cm² existed on the surface of the substrate. The color of the film was changed a little.

### (Comparative Example 2)

Using the same apparatus as Example 1, the silica film with a thickness of 0.22 µm was formed on the surface of a silicon substrate 15 by the same method as Example 1 except that the heat treatment of the first step was conducted by thermally oxidizing at 1000°C for 50 minutes. Thereafter the substrate was washed, and then the substrate was maintained at 1200°C for 2000 minutes by the same apparatus and method as Example 1, and thereby there was provided an optical waveguide wherein a silica film having the intended thickness of 5.0 µm was formed on the surface of the silicon substrate 15.

The surface was measured with a dust-particle-inspection equipment. A quite large number of particles as 750 number/cm² existed on the surface of the substrate. The color of the film was changed a little.

The present invention is not limited to the above-described embodiment. The above-described embodiment is a mere example, and those having the substantially same structure as that described in the appended claims and providing the similar action and effects are included in the scope of the present invention.

## Claims

1. A method for producing an optical waveguide substrate at least comprising a step of forming a silica film to be an optical waveguide having a thickness of 5 µm or more on a surface of a substrate by oxidizing a silicon substrate **characterized in that** the oxide film is formed by forming an oxide film having a film thickness of 0.3 µm or more on the silicon substrate first, and then oxidizing the silicon substrate in an oxidizing atmosphere heated at 1000°C or higher to form a remaining oxide film.

2. The method for producing an optical waveguide substrate according to Claim 1 **characterized in that** the oxide film having a film thickness of 0.3 µm or more is formed first on the silicon substrate by thermal oxidation in an oxidizing atmosphere heated at 1000°C or higher.

3. The method for producing an optical waveguide substrate according to Claim 1 or 2 **characterized in that** the oxidizing atmosphere is an atmosphere containing steam.

4. The method for producing an optical waveguide substrate according to any one of Claims 1 to 3 **characterized in that** the substrate is washed between the step of forming an oxide film having a film thickness of 0.3 µm or more first on a silicon substrate and the next step of forming the remaining oxide film.

5. An optical waveguide substrate that a silica film to be an optical waveguide having a film thickness of 5 µm or more is formed by oxidizing a silicon substrate on a surface of the silicon substrate **characterized in that** particles having a size of 0.3 µm or more adhered on the surface of the optical waveguide substrate are 500 numbers/cm² or less.
